# EUROPEAN PATENT APPLICATION

(11) **EP 4 763 705 A1**
(43) Date of publication of application: **24.06.2026**
(21) Application number: 25221124.8
(22) Date of filing: 05.12.2025
(51) Int. Cl.: B64D 27/33, B64D 37/30, B64D 37/34

(54) **HYBRID TURBOSHAFT AND SOLID OXIDE FUEL CELL PROPULSION SYSTEM AND RELATED METHODS**

(30) Priority: 23.12.2024 US 202418999917
(71) Applicant: The Boeing Company, Arlington, VA 22202 (US)
(72) Inventor: SHI, Mingxuan, Arlington, 22202 (US)
(74) Representative: Lissandrini, Marco

(57) **Abstract**

Hybrid propulsion systems that utilize liquid natural gas solid oxide fuel cells in a manner practical for use in aircraft that avoid the use of heavy batteries, provide transient response times suitable for use in aircraft, and/or simplify reactant pre-conditioning systems using a compressor and turbine pair operatively coupled to the solid oxide fuel cell. Such hybrid propulsion systems for an aircraft may include a liquid natural gas turboshaft engine, a turbo generator operatively coupled to the turboshaft engine, a liquid natural gas solid oxide fuel cell, and an electric fan. The electric fan may be configured to generate thrust for the aircraft and may be powered by the turbo generator and/or the solid oxide fuel cell. Fuel cell reactants may be pre-conditioned using turboshaft bleed air, and the liquid natural gas may be pre-heated by fuel exhaust from the solid oxide fuel cell.

## Description

### FIELD

The present disclosure relates to propulsion systems, and more particularly to solid oxide fuel cell propulsion systems using liquid natural gas.

### BACKGROUND

Turboshaft engines are a form of jet engine that have long been used in the propulsion systems of aircraft and other vehicles or machinery. Attempts have been made to design turboshaft engines with reduced or zero carbon dioxide emissions and other greenhouse gases. One such solution, electrified propulsion, suffers from the excessive weight penalties which are too large to be feasible in the aviation industry. Attempts also have been made to incorporate fuel cells into such propulsion systems, though conventional fuel cell systems suffer from slower transient response times that are not suitable for aviation and may disadvantageously require a complex system to pre-condition (heat and pressurize) the fuel cell reactants.

### SUMMARY

Presently disclosed hybrid propulsion systems may be configured to reduce emissions and improve efficiency of overall airplane propulsion systems using alternative energy sources and configurations not contemplated in the prior art, while at the same time avoiding disadvantages of prior art systems such as excessive weight from electrified propulsion and slow transient response times. By addressing these disadvantages of prior art systems, presently disclosed hybrid propulsion systems may utilize liquid natural gas solid oxide fuel cells in a manner practical for use in aircraft. Presently disclosed hybrid propulsion systems also may be configured to simplify reactant pre-conditioning systems.

In an example, a hybrid propulsion system for an aircraft may include a liquid natural gas turboshaft engine, a turbo generator operatively coupled to the turboshaft engine, a liquid natural gas solid oxide fuel cell, and an electric fan. The electric fan may be configured to generate thrust for the aircraft and may be powered by the turbo generator and/or the solid oxide fuel cell. Aircraft including a fuselage, a wing supported by the fuselage, a turboshaft engine, and such a hybrid propulsion system are also within the scope of the present disclosure.

Methods of providing thrust to an aircraft via a hybrid propulsion system also are disclosed. Such methods may include generating a first amount of electric power via a turbo generator that is operatively coupled to a liquid natural gas turboshaft engine of the aircraft, and generating a second amount of electric power via a liquid natural gas solid oxide fuel cell. An electric fan may be powered via the first amount of electric power and/or the second amount of electric power, thereby generating thrust for the aircraft via operation of the electric fan. The first amount of electric power and the second amount of electric power may be provided to the electric fan substantially simultaneously.

### BRIEF DESCRIPTION OF THE DRAWINGS

Fig. 1 is an illustration of an example aircraft according to the present disclosure.
Fig. 2 is a schematic diagram representing non-exclusive examples of hybrid propulsion systems according to the present disclosure.
Fig. 3 is a flowchart schematically representing methods according to the present disclosure.

### DESCRIPTION

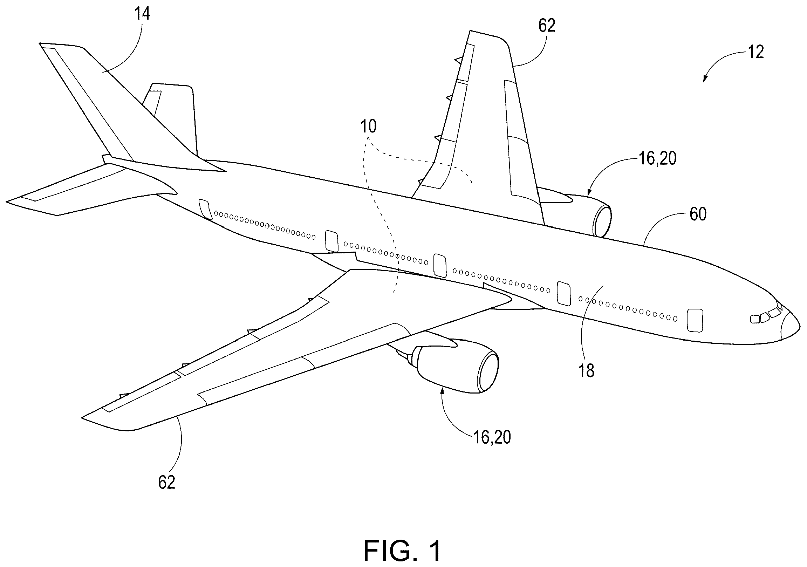

Fig. 1 illustrates a non-exclusive example of an aircraft 12 that may comprise one or more hybrid propulsion systems 10 according to the present disclosure. While illustrated as a fixed-wing airliner comprising a fuselage 60 having a cabin 18, two wings 62 supported by the fuselage 60, a tail 14, and a jet engine 16 supported by each wing 62, other configurations of aircraft 12 are within the scope of the present disclosure, including, for example, rotorcraft, military craft, autonomous aircraft, etc.. Fig. 1 schematically illustrates that one or more components of, and optionally all of, hybrid propulsion system 10 may be supported by and/or housed in one or more of the fuselage 60 and/or the wing(s) 62 of aircraft 12.

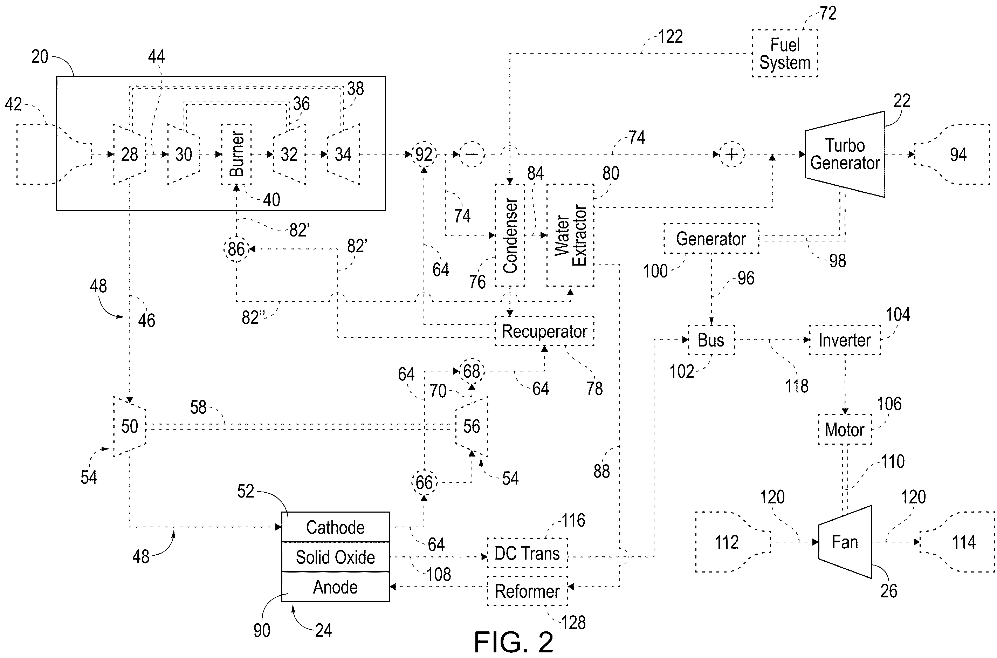

Fig. 2 schematically represents non-exclusive examples of hybrid propulsion systems 10 according to the present disclosure. Generally, in Fig. 2, elements that are likely to be included in a given example are illustrated in solid lines, while elements that are optional to a given example or that correspond to a specific example are illustrated in broken lines. However, elements that are illustrated in solid lines are not essential to all examples of the present disclosure, and an element shown in solid lines may be omitted from a particular example without departing from the scope of the present disclosure.

As schematically represented in Fig. 2, hybrid propulsion systems 10 for an aircraft (e.g., aircraft 12) include at least a liquid natural gas turboshaft engine 20, a turbo generator 22 operatively coupled to turboshaft engine 20, a liquid natural gas solid oxide fuel cell 24, and an electric fan 26. Electric fan 26 is configured to generate thrust for the aircraft, and is powered by turbo generator 22 and/or solid oxide fuel cell 24. In some examples, turbo generator 22 and solid oxide fuel cell 24 simultaneously provide electric power to electric fan 26. Hybrid propulsion system 10 may include a fuel system 72 configured to provide liquid natural gas to turboshaft engine 20 and solid oxide fuel cell 24.

Turboshaft engine 20 generally includes a low-pressure compressor 28, a high-pressure compressor 30, a high-pressure turbine 32, and a low-pressure turbine 34. A burner 40 (e.g. a combustion chamber, or combustor) is housed within turboshaft engine 20, generally between high-pressure compressor 30 and high-pressure turbine 32. A first shaft 36 may be coupled to high-pressure compressor 30 and high-pressure turbine 32 such that high-pressure compressor 30 may be driven by high-pressure turbine 32, and a second shaft 38 may be coupled to low-pressure compressor 28 and low-pressure turbine 34 within turboshaft engine 20 such that low-pressure compressor 28 may be driven by low-pressure turbine 34. A primary inlet 42 receives ambient air, or air from the environment, and conditions the environment air for downstream components of hybrid propulsion system 10, such as by reducing a Mach number of the environment air. The air is then sent to low-pressure compressor 28 (i.e., low-pressure compressor 28 receives air from primary inlet 42), which pressurizes (compresses) the air from primary inlet 42. Low-pressure compressor 28 sends a first portion 44 of the pressurized air to high-pressure compressor 30 for further pressurization (and then to burner 40 for combustion), while a second portion 46 (also referred to herein as bleed air 46) of the pressurized air is diverted along a bleed flow path 48 towards solid oxide fuel cell 24. In other words, bleed air 46 is extracted from turboshaft engine 20 after compression by low-pressure compressor 28, to provide pre-conditioned air to solid oxide fuel cell 24.

Low-pressure compressor 28, along with an additional compressor 50 downstream from low-pressure compressor 28 along bleed flow path 48, pre-condition bleed air 46 for solid oxide fuel cell 24 by pressurizing and elevating the temperature of bleed air 46 due to compression of the bleed air. Once bleed air 46 is compressed in both low-pressure compressor 28 and compressor 50, it continues along bleed flow path 48 and is delivered to a cathode 52 of solid oxide fuel cell 24 and thus serves as a reactant, or source air, for solid oxide fuel cell 24.

Compressor 50 is part of a compressor and turbine pair 54 that also includes a turbine 56 and a shaft 58 operatively coupling compressor 50 and turbine 56 such that compressor 50 is driven by power from turbine 56. Compressor 50 is upstream of cathode 52 of solid oxide fuel cell 24 to deliver bleed air 46 to cathode 52, and turbine 56 is downstream of cathode 52 to receive fuel cell exhaust 64 from the solid oxide fuel cell 24. Compressor and turbine pair 54 may serve to extract power out of fuel cell exhaust 64 exiting solid oxide fuel cell 24 to increase efficiency of hybrid propulsion system 10, rather than wasting heat from fuel cell exhaust 64. For example, compressor and turbine pair 54 may be configured to tune or control one or more conditions of fuel cell reactants (e.g., bleed air 46) for solid oxide fuel cell 24 using energy extracted from fuel cell exhaust 64. In some examples, turbine 56 is configured to limit power extraction of fuel cell exhaust 64 in order to maintain a pressure of fuel cell exhaust 64 above a desired threshold pressure. Additionally or alternatively, compressor and turbine pair 54 may be configured to slightly tune the reactant conditions rather than primarily pressurizing the reactants, and thus may serve as a simplified means for pre-conditioning bleed air 46 for solid oxide fuel cell 24, as compared to conventional fuel cell systems that require complex conditioning systems.

In some examples, hybrid propulsion system 10 includes a splitter 66 upstream of turbine 56 and downstream of cathode 52 of solid oxide fuel cell 24, as well as a mixer 68 downstream of turbine 56. In such examples, mixer 68 receives turbine exhaust 70 from turbine 56 and fuel cell exhaust 64 from solid oxide fuel cell 24 and mixes turbine exhaust 70 with fuel cell exhaust 64. Splitter 66 and mixer 68 may be configured to control an exit pressure of turbine exhaust 70 exiting turbine 56.

As noted, liquid natural gas from fuel system 72 is used for fuel/reactants for both turboshaft engine 20 and solid oxide fuel cell 24. Liquid natural gas from fuel system 72 also may be used in steam generation processes within hybrid propulsion system 10. In some examples, liquid natural gas from fuel system 72 is used to cool engine exhaust 74 from turboshaft engine 20 and condense water out of engine exhaust 74. Additionally or alternatively, liquid natural gas from fuel system 72 may be pre-heated for solid oxide fuel cell 24 using engine exhaust 74. To these ends, hybrid propulsion system 10 may include a condenser 76, a recuperator 78, and/or a water extractor 80. Condenser 76 may receive liquid natural gas 122 from fuel system 72 and evaporate (e.g., gasify) the liquid natural gas to form gaseous natural gas 82 (i.e., condenser 76 may be configured to convert liquid natural gas 122 to gaseous natural gas 82). In other words, liquid natural gas 122 from fuel system 72 may be pre-heated by engine exhaust 74 in condenser 76 before the liquid natural gas is provided to an anode 90 of solid oxide fuel cell 24. Condenser 76 also may condense liquid water out of engine exhaust 74 (e.g., water vapor) exiting turboshaft engine 20.

Recuperator 78 may be positioned downstream from condenser 76 and may receive fuel cell exhaust 64 from solid oxide fuel cell 24 (which may be via turbine 56 and mixer 68). Recuperator 78 may be configured to provide gaseous natural gas 82 to turboshaft engine 20 (e.g., to burner 40). In some examples, recuperator 78 further heats the gaseous natural gas from condenser 76 using heat from fuel cell exhaust 64. Water extractor 80 may be configured to receive air with liquid water in the air 84 from condenser 76, as well as gaseous natural gas 82. For example, a splitter 86 downstream of recuperator 78 may split gaseous natural gas 82 exiting recuperator 78 such that some gaseous natural gas 82' is directed to turboshaft engine 20, while some gaseous natural gas 82" is directed to water extractor 80. Water extractor 80 may be configured to generate water vapor and add (e.g., mix) the water vapor to gaseous natural gas 82" it receives in order to provide humidified natural gas 88 to an anode 90 of solid oxide fuel cell 24. In some examples, anode 90 has an internal reformer in the anode to convert natural gas into hydrogen-rich gas, while in other examples an external reformer 128 is provided upstream of anode 90 to convert natural gas into hydrogen-rich gas.

In some examples, hybrid propulsion system 10 includes a turboshaft mixer 92 downstream of recuperator 78 and low-pressure turbine 34. In such examples, turboshaft mixer 92 is configured to mix high-pressure fuel cell exhaust 64 into an exit stream (e.g., engine exhaust 74) exiting low-pressure turbine 34 of turboshaft engine 20, after fuel cell exhaust 64 passes through recuperator 78, which can result in more power generation. This may be accomplished due to fuel cell exhaust 64 having a similar pressure as that of engine exhaust 74 exiting low-pressure turbine 34. The high pressure of fuel cell exhaust 64 may be accomplished via disclosed hybrid propulsion systems 10 due to less power extraction through turbine 56 as compared to conventional hybrid gas turbine fuel cells. This mixing of fuel cell exhaust 64 back into turboshaft engine 20 (e.g., mixing fuel cell exhaust 64 and engine exhaust 74) can increase the power generated by turbo generator 22, which receives engine exhaust 74 from turboshaft engine 20. In turn, turbo generator 22 extracts power from engine exhaust 74 to create electricity to power electric fan 26, as indicated at 96. In some examples, a shaft 98 coupled to turbo generator 22 and a second generator 100 produce electricity 96. Electricity 108 output from solid oxide fuel cell 24 may, after passing through a direct current transformer 116 that converts direct current (DC) power to alternating current (AC) power, be combined with electricity 96 from turbo generator 22 via a bus 102, resulting in combined electricity, indicated at 118. Combined electricity 118 may pass through an inverter 104 before arriving at an electric motor 106, which may be operatively coupled to electric fan 26 via a fan shaft 110. In this manner, combined electricity 118 from both turbo generator 22 and solid oxide fuel cell 24 may cause operation of electric motor 106, which powers electric fan 26, thereby generating thrust for the aircraft. In some examples, electric fan 26 is inline with turboshaft engine 20. In some examples, a secondary inlet 112 allows propulsive fan air 120 to be drawn into electric fan 26, while a secondary nozzle 114 that is configured to expand propulsive fan air 120 from electric fan 26 to create the thrust.

Electric power for electric fan 26 may be supplied from solid oxide fuel cell 24 on its own, from turbo generator 22 on its own, and/or from both solid oxide fuel cell 24 and turbo generator 22. In some examples, electric power for electric fan 26 is supplied from both solid oxide fuel cell 24 and turbo generator 22 simultaneously. Hybrid propulsion systems 10 may include an electronic engine controller configured to control the source and relative amounts of electricity supplied to electric fan 26. For example, the electronic engine controller may be configured to distribute a ratio of electric power load to solid oxide fuel cell 24 and turbo generator 22, thereby determining a ratio of fuel consumption of solid oxide fuel cell 24 and turbo generator 22. The ratio of fuel consumption may in turn determine a fuel ratio of an amount of fuel distributed to each of turboshaft engine 20 and solid oxide fuel cell 24 by fuel system 72. Disclosed hybrid propulsion systems 10 may be configured such that a transient response time of electric fan 26 is sufficiently fast so as to be suitable for use in the aircraft. For example, the way solid oxide fuel cell 24 and turboshaft engine 20 are operatively coupled in presently disclosed hybrid propulsion systems 10 may have the technical effect of decreasing (e.g., speeding up) the transient response time of electric fan 26, as compared to conventional systems using only fuel cells. Faster transient response in disclosed hybrid propulsion systems 10 can be handled by the turboshaft or gas turbine side (e.g., turboshaft engine 20), and then after the operation of hybrid propulsion system 10 is near steady state, the power split can be transferred from gas turbine side to fuel cell side (e.g., solid oxide fuel cell 24). In this manner, disclosed hybrid propulsions systems 10 may be configured to take advantage of the faster transient response times of turboshaft engine 20, while also obtaining fuel efficiency benefits from solid oxide fuel cell 24.

A controller such as the described electronic engine controller may be any suitable device or devices that are configured to perform the functions of the electronic engine controller discussed herein. For example, the controller may include one or more of an electronic controller, a dedicated controller, a special-purpose controller, a personal computer, a special-purpose computer, a display device, a logic device, a memory device, and/or a memory device having computer readable media suitable for storing computer-executable instructions for implementing aspects of systems and/or methods according to the present disclosure.

The benefits of disclosed hybrid propulsion systems 10 may include reduced emissions and/or improved efficiency of the overall aircraft propulsion system, as compared to prior art propulsion systems. Disclosed hybrid propulsion systems 10 utilize alternative energy sources and configurations not contemplated in the prior art and are configured to avoid the use of heavy batteries, which prior art electrified systems require. Furthermore, because disclosed hybrid propulsion systems 10 utilize bleed air 46 as a pressurized air reactant for solid oxide fuel cell 24, complex pre-conditioning systems also may be avoided, which is another advantage over the prior art. Additionally or alternatively, hybrid propulsion systems 10 according to the present disclosure may provide improved transient response times by coupling operation of solid oxide fuel cell 24 and turboshaft engine 20.

The scope of the present disclosure also includes aircraft including disclosed hybrid propulsion systems 10, such as aircraft 12 schematically represented in Fig. 1. Such aircraft 12 may include fuselage 60, wings 62 supported by fuselage 60, one or more jet engines 16 (which may be turboshaft engines 20 as described herein), and hybrid propulsion system 10. In some examples, at least a portion of hybrid propulsion system 10 is supported by and/or housed in a wing 62. For example, solid oxide fuel cell 24, compressor and turbine pair 54, and/or recuperator 78 of hybrid propulsion system 10 may be housed within wing 62. Additionally or alternatively, electric fan 26 may be supported by wing 62. In some examples, turboshaft engine 20 is supported by tail 14 of fuselage 60 and/or by wing 62. In some examples, turbo generator 22, condenser 76, and/or turboshaft mixer 92 are housed inside turboshaft engine 20. Electric motor 106 driving electric fan 26 may be housed in an electric fan nacelle. Implementations of aircraft 12 may include, but are not limited to, a single aisle turboelectric aircraft.

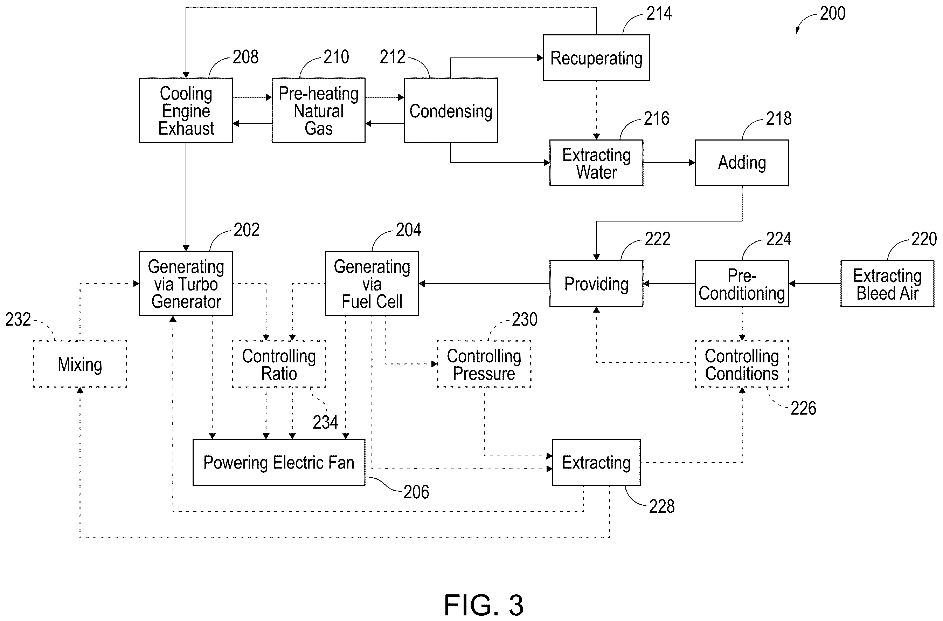

Fig. 3 schematically provides a flowchart that represents illustrative, non-exclusive examples of methods 200 according to the present disclosure. In Fig. 3, some steps are illustrated in dashed boxes indicating that such steps may be optional or may correspond to an optional version of a method 200 according to the present disclosure. That said, not all methods 200 according to the present disclosure are required to include the steps illustrated in solid boxes. The methods 200 and steps illustrated in Fig. 3 are not limiting and other methods and steps are within the scope of the present disclosure, including methods having greater than or fewer than the number of steps illustrated, as understood from the discussions herein.

Methods 200 of providing thrust to an aircraft (e.g., aircraft 12) via a hybrid propulsion system (e.g., hybrid propulsion system 10) generally include generating a first amount of electric power via a turbo generator (e.g. turbo generator 22), at 202, generating a second amount of electric power via a liquid natural gas solid oxide fuel cell (e.g., solid oxide fuel cell 24), at 204, and powering an electric fan (e.g., electric fan 26) via the first amount of electric power and/or the second amount of electric power, thereby generating thrust for the aircraft via operation of the electric fan, at 206. In other words, powering the electric fan at 206 includes providing the first amount of electric power and/or the second amount of electric power to the electric fan, optionally simultaneously. To accomplish this, the turbo generator is operatively coupled to a liquid natural gas turboshaft engine (e.g., turboshaft engine 20) of the aircraft.

Methods 200 may include cooling engine exhaust (e.g., engine exhaust 74) from the turboshaft engine at 208 via liquid natural gas. Additionally or alternatively, the liquid natural gas from a fuel system (e.g., fuel system 72) may be pre-heated at 210 by the engine exhaust (e.g., the exit stream of low-pressure turbine 34). Some methods 200 include condensing, at 212 (e.g., via condenser 76), liquid natural gas from the fuel system of the hybrid propulsion system and engine exhaust from the turboshaft engine, followed by recuperating, at 214 (e.g., by recuperator 78), gaseous natural gas from the condenser using fuel cell exhaust from the solid oxide fuel cell. In some examples, recuperating at 214 includes pre-heating gaseous natural gas using fuel cell exhaust from the solid oxide fuel cell. Some methods 200 additionally or alternatively include extracting water and generating water vapor from exhaust of the turboshaft engine at 216 (e.g., via water extractor 80), and adding water vapor to natural gas from the fuel system to provide humidified natural gas to an anode (e.g., anode 90) of the solid oxide fuel cell, at 218.

Methods 200 may include extracting bleed air from a low-pressure compressor of the turboshaft engine (e.g., low-pressure compressor 28) at 220, and providing extracted bleed air to a cathode (e.g., cathode 52) of the solid oxide fuel cell at 222. Before the providing at 222, the bleed air (e.g., reactants) for the solid oxide fuel cell may be pre-conditioned at 224 via the low-pressure compressor of the turboshaft engine and exhaust from the solid oxide fuel cell (e.g., fuel cell exhaust 64). Some methods 200 include controlling one or more conditions of fuel reactants (e.g., bleed air) for the solid oxide fuel cell at 226, via a compressor and turbine pair (e.g., compressor and turbine pair 54), with the compressor of the compressor and turbine pair receiving bleed air from the low-pressure compressor of the turboshaft engine. Power may be extracted from the fuel cell exhaust at 228 to condition the bleed air at the cathode of the solid oxide fuel cell, via the compressor and turbine pair. In some examples, the power extracted from the fuel cell exhaust is limited, or controlled, at 230 maintain a pressure of the fuel cell exhaust, via the compressor and turbine pair, where the turbine of the compressor and turbine pair receives fuel cell exhaust from the cathode of the solid oxide fuel cell. Additionally or alternatively, a pressure of turbine exhaust from the turbine of the compressor and turbine pair (e.g., turbine exhaust 70 from turbine 56) may be controlled, or limited, at 230, via a splitter upstream of the turbine and a mixer downstream of the turbine (e.g., splitter 66 and mixer 68). Fuel cell exhaust may be mixed at 232 into an exit stream exiting the low-pressure turbine of the turboshaft engine, via a turboshaft mixer (e.g., turboshaft mixer 92) downstream of the recuperator, thereby increasing power generated by the turbo generator. In some examples, a ratio of power generated by the solid oxide fuel cell and power generated by the turbo generator is controlled at 234, such as via an electronic engine control system of the hybrid propulsion system.

Illustrative, non-exclusive examples of inventive subject matter according to the present disclosure are described in the following enumerated paragraphs:
A1. A hybrid propulsion system (10) for an aircraft (12), the hybrid propulsion system (10) comprising:
   a liquid natural gas turboshaft engine (20);
   a turbo generator (22) operatively coupled to the turboshaft engine (20);
   a liquid natural gas solid oxide fuel cell (24); and
   an electric fan (26) configured to generate thrust for the aircraft (12), wherein the electric fan (26) is powered by the turbo generator (22) and/or the solid oxide fuel cell (24).
A1.1. The hybrid propulsion system (10) of paragraph A1, wherein the turbo generator (22) and the solid oxide fuel cell (24) simultaneously provide electric power to the electric fan (26).
A2. The hybrid propulsion system (10) of paragraph A1 or A1.1, further comprising a fuel system (72) configured to provide liquid natural gas to the turboshaft engine (20) and the solid oxide fuel cell (24).
A2.1. The hybrid propulsion system (10) of paragraph A2, wherein the liquid natural gas from the fuel system (72) is configured to cool engine exhaust (74) from the turboshaft engine (20).
A2.2. The hybrid propulsion system (10) of any of paragraphs A2-A2.1, wherein the hybrid propulsion system (10) is configured to pre-heat the liquid natural gas from the fuel system (72) using engine exhaust (74) from a low-pressure turbine (34) of the turboshaft engine (20).
A2.3. The hybrid propulsion system (10) of any of paragraphs A2-A2.3, further comprising a condenser (76) that receives the liquid natural gas from the fuel system (72).
A2.4. The hybrid propulsion system (10) of paragraph A2.3, wherein the condenser (76) gasifies the liquid natural gas to form gaseous natural gas (82), and wherein the condenser (76) condenses liquid water out of engine exhaust (74) exiting the turboshaft engine (20).
A2.5. The hybrid propulsion system (10) of paragraph A2.3 or A2.4, further comprising a recuperator (78) downstream from the condenser (76), wherein the recuperator (78) receives fuel cell exhaust (64) from the solid oxide fuel cell (24).
A2.6. The hybrid propulsion system (10) of paragraph A2.5, wherein the recuperator (78) provides a/the gaseous natural gas (82) to the turboshaft engine (20).
A2.7. The hybrid propulsion system (10) of paragraph A2.5 or A2.6, wherein the recuperator (78) further heats the gaseous natural gas (82), using heat from the fuel cell exhaust (64) from the solid oxide fuel cell (24).
A2.8. The hybrid propulsion system (10) of any of paragraphs A2.3-A2.7, further comprising a water extractor (80) configured to receive air (84) with liquid water in the air (84) from the condenser (76), wherein the water extractor (80) is further configured to receive gaseous natural gas (82).
A2.9. The hybrid propulsion system (10) of paragraph A2.8, wherein the water extractor (80) generates water vapor and adds (mixes) the water vapor to the gaseous natural gas (82) to provide humidified natural gas (88) to an anode of the solid oxide fuel cell (24).
A2.10. The hybrid propulsion system (10) of any of paragraphs A2.3-A2.9, wherein the condenser (76) is configured to condense water out of a/the engine exhaust (74) from the turboshaft engine (20).
A2.11. The hybrid propulsion system (10) of any of paragraphs A1-A2.10, further comprising a/the low-pressure turbine (34) of the turboshaft engine (20).
A2.12. The hybrid propulsion system (10) of any of paragraphs A1-A2.11, wherein an/the anode (90) of the solid oxide fuel cell (24) comprises an internal reformer configured to convert natural gas into hydrogen-rich gas.
A2.13. The hybrid propulsion system (10) of any of paragraphs A1-A2.11, further comprising an external reformer (128) upstream of an/the anode (90) of the solid oxide fuel cell (24), wherein the external reformer (128) is configured to convert natural gas into hydrogen-rich gas.
A3. The hybrid propulsion system (10) of any of paragraphs A1-A2.13, wherein the turboshaft engine (20) comprises a low-pressure compressor (28).
A4. The hybrid propulsion system (10) of paragraph A3, wherein the low-pressure compressor (28) is configured to receive air (84) for the solid oxide fuel cell (24) from a primary inlet (42) configured to receive environment air.
A4.1. The hybrid propulsion system (10) of paragraph A4, wherein the primary inlet (42) is configured to condition the environment air for downstream components of the hybrid propulsion system (10) by reducing a Mach number of the environment air.
A4.2 The hybrid propulsion system (10) of paragraph A4 or A4.1, wherein the low-pressure compressor (28) is configured to pre-condition bleed air (46) for the solid oxide fuel cell (24) via compression of the bleed air (46), which pressurizes and elevates a temperature of the bleed air (46).
A5. The hybrid propulsion system (10) of any of paragraphs A3-A4.2, wherein the low-pressure compressor (28) is configured to deliver the bleed air (46) to the solid oxide fuel cell (24).
A6. The hybrid propulsion system (10) of any of paragraphs A3-A5, wherein bleed air (46) extracted from the low-pressure compressor (28) is configured to be source air for the solid oxide fuel cell (24).
A7. The hybrid propulsion system (10) of any of paragraphs A1-A6, further comprising a compressor and turbine pair (54), wherein the compressor (50) is downstream of a/the low-pressure compressor (28) of the turboshaft engine (20) following a bleed flow path (48), wherein the compressor (50) is upstream of a cathode (52) of the solid oxide fuel cell (24), and wherein the turbine (56) is downstream of the cathode (52) of the solid oxide fuel cell (24) such that the turbine (56) is configured to receive fuel cell exhaust (64) from the solid oxide fuel cell (24).
A8. The hybrid propulsion system (10) of paragraph A7, wherein the compressor and turbine pair (54) is configured to tune or control one or more conditions of fuel cell reactants for the solid oxide fuel cell (24).
A9. The hybrid propulsion system (10) of paragraph A7 or A8, wherein the compressor and turbine pair (54) is configured to extract energy from the fuel cell exhaust (64) from the solid oxide fuel cell (24) to condition the reactant/bleed air (46) at a/the cathode (52) of the solid oxide fuel cell (24).
A9.1. The hybrid propulsion system (10) of any of paragraphs A7-A9, wherein the turbine (56) is configured to limit power extraction of the fuel cell exhaust (64) from the solid oxide fuel cell (24) to maintain a pressure of the fuel cell exhaust (64) from the solid oxide fuel cell (24).
A10. The hybrid propulsion system (10) of any of paragraphs A7-A9.1, further comprising:
   a splitter (66) upstream of the turbine (56) and downstream of the cathode (52) of the solid oxide fuel cell (24); and
   a mixer (68) downstream of the turbine (56), wherein the mixer (68) receives turbine exhaust (70) from the turbine (56) and fuel cell exhaust (64) from the solid oxide fuel cell (24), and wherein the splitter (66) and the mixer (68) are configured to control an exit pressure of the engine exhaust (74) exiting the turbine (56).
A11. The hybrid propulsion system (10) of any of paragraphs A1-A10, further comprising a turboshaft mixer (92) downstream of the recuperator (78), wherein the turboshaft mixer (92) mixes high-pressure fuel cell exhaust (64) from the solid oxide fuel cell (24) into an exit stream exiting from a/the low-pressure turbine (34) of the turboshaft engine (20), thereby increasing power generated by the turbo generator (22).
A12. The hybrid propulsion system (10) of any of paragraphs A1-A11, wherein a first pressure of fuel cell exhaust (64) from the solid oxide fuel cell (24) is similar to a second pressure of an/the exit stream of a/the low-pressure turbine (34) of the turboshaft engine (20).
A13. The hybrid propulsion system (10) of any of paragraphs A1-A12, wherein the hybrid propulsion system (10) is configured such that a transient response time of the electric fan (26) is sufficiently fast so as to be suitable for the aircraft (12).
A14. The hybrid propulsion system (10) of any of paragraphs A1-A13, wherein the solid oxide fuel cell (24) and the turboshaft engine (20) are operatively coupled together such that an/the transient response time of the electric fan (26) is decreased (sped up) as compared to conventional systems using only fuel cells.
A15. The hybrid propulsion system (10) of any of paragraphs A1-A14, wherein the hybrid propulsion system (10) comprises an electronic engine controller configured to distribute a ratio of electric power load to the solid oxide fuel cell (24) and the turbo generator (22), thereby determining a ratio of fuel consumption of the solid oxide fuel cell (24) and the turbo generator (22).
A16. The hybrid propulsion system (10) of paragraph A15, wherein the ratio of fuel consumption determines a fuel ratio of an amount of fuel distributed to each of the turboshaft engine (20) and the solid oxide fuel cell (24) by a/the fuel system (72).
B1. An aircraft (12), comprising:
   a fuselage (60);
   a wing (62) supported by the fuselage (60);
   a turboshaft engine (20); and
   the hybrid propulsion system (10) of any of paragraphs A1-A16.
B2. The aircraft (12) of paragraph B1, wherein the hybrid propulsion system (10) is supported by the wing (62).
B3. The aircraft (12) of any of paragraphs B1-B2, wherein at least a portion of the hybrid propulsion system (10) is housed within the wing (62).
B3.1. The aircraft (12) of paragraph B3, wherein the solid oxide fuel cell (24), a/the compressor and turbine pair (54) of the hybrid propulsion system (10), and/or a/the recuperator (78) of the hybrid propulsion system (10) are housed within the wing (62).
B4. The aircraft (12) of any of paragraphs B1-B3, wherein the electric fan (26) is supported by the wing (62).
B5. The aircraft (12) of any of paragraphs B1-B4, wherein the turboshaft engine (20) is supported by a tail (14) of the fuselage (60).
B6. The aircraft (12) of any of paragraphs B1-B5, wherein the turboshaft engine (20) is supported by the wing (62).
B7. The aircraft (12) of any of paragraphs B1-B6, wherein the turbo generator (22), a/the condenser (76) of the hybrid propulsion system (10), and/or a/the mixer (68) of the hybrid propulsion system (10) are housed inside the turboshaft engine (20).
B8. The aircraft (12) of any of paragraphs B1-B7, wherein an electric motor (106) driving the electric fan (26) is housed in an electric fan nacelle.
C1. A method (200) of providing thrust to an aircraft (12) via a hybrid propulsion system (10), the method (200) comprising:
   generating (202) a first amount of electric power via a turbo generator (22) that is operatively coupled to a liquid natural gas turboshaft engine (20) of the aircraft (12);
   generating (204) a second amount of electric power via a liquid natural gas solid oxide fuel cell (24); and
   powering (206) an electric fan (26) via the first amount of electric power and/or the second amount of electric power, thereby generating thrust for the aircraft (12) via operation of the electric fan (26).
C2. The method (200) of paragraph C1, wherein the first amount of electric power and the second amount of electric power are provided to the electric fan (26) substantially simultaneously.
C3. The method (200) of any of paragraphs C1-C2, further comprising cooling (208) engine exhaust (74) from the turboshaft engine (20) via liquid natural gas.
C4. The method (200) of any of paragraphs C1-C3, further comprising pre-heating (210) liquid natural gas from a fuel system (72) of the hybrid propulsion system (10) via exhaust from the low-pressure turbine (34).
C4.1. The method (200) of any of paragraphs C1-C4, further comprising pre-heating (210) gaseous natural gas (82) via fuel cell exhaust (64) from the solid oxide fuel cell (24), via a/the recuperator (78) of the hybrid propulsion system (10).
C5. The method (200) of any of paragraphs C1-C4.1, further comprising condensing (212) liquid natural gas from a/the fuel system (72) of the hybrid propulsion system (10) and engine exhaust (74) from the turboshaft engine (20).
C6. The method (200) of any of paragraphs C1-C5, further comprising recuperating (214) gaseous natural gas (82) from a condenser (76) of the hybrid propulsion system (10) via fuel cell exhaust (64) from the solid oxide fuel cell (24).
C7. The method (200) of any of paragraphs C1-C6, further comprising:
   extracting (220) water and generating water vapor from exhaust of the turboshaft engine (20); and
   adding (218) water vapor to natural gas from a/the fuel system (72) to provide humidified natural gas (88) to an anode (90) of the solid oxide fuel cell (24).
C8. The method (200) of any of paragraphs C1-C7, further comprising pre-conditioning (224) reactants for the solid oxide fuel cell (24), via a low-pressure compressor (28) of the turboshaft engine (20).
C9. The method (200) of any of paragraphs C1-C8, further comprising pre-conditioning (224) reactants for the solid oxide fuel cell (24) using bleed air (46) from a/the low-pressure compressor of the turboshaft engine (20) and exhaust from the solid oxide fuel cell (24).
C10. The method (200) of any of paragraphs C1-C9, further comprising extracting (228) bleed air (46) from a/the low-pressure compressor (28) of the turboshaft engine (20) and providing extracted bleed air (46) to a cathode (52) of the solid oxide fuel cell (24).
C11. The method (200) of any of paragraphs C1-C10, further comprising controlling (226) one or more conditions of fuel reactants for the solid oxide fuel cell (24), via a compressor and turbine pair (54), wherein the compressor (50) of the compressor and turbine pair (54) receives bleed air (46) from a/the low-pressure compressor (28) of the turboshaft engine (20).
C12. The method (200) of any of paragraphs C1-C11, further comprising extracting (228) energy from a/the fuel cell exhaust (64) from the solid oxide fuel cell (24) to condition bleed air (46) at a/the cathode (52) of the solid oxide fuel cell (24), via a/the compressor and turbine pair (54).
C13. The method (200) of any of paragraphs C1-C12, further comprising limiting (230) power extraction of fuel cell exhaust (64) from the solid oxide fuel cell (24) to maintain a pressure of the exhaust from the solid oxide fuel cell (24), via a/the compressor and turbine pair (54), wherein the turbine (56) of the compressor and turbine pair (54) receives the fuel cell exhaust (64) from a/the cathode (52) of the solid oxide fuel cell (24).
C14. The method (200) of any of paragraphs C1-C13, further comprising controlling (230) a pressure of turbine exhaust (70) from a/the turbine (56) of a/the compressor and turbine pair (54), via a splitter (66) upstream of the turbine (56) and a mixer (68) downstream of the turbine (56).
C15. The method (200) of any of paragraphs C1-C14, further comprising mixing (232) exhaust from the solid oxide fuel cell (24) into an exit stream exiting a low-pressure turbine (34) of the turboshaft engine (20), via a turboshaft mixer (92) downstream of the recuperator (78), thereby increasing power generated by the turbo generator (22).
C16. The method (200) of any of paragraphs C1-C15, further comprising controlling (234) a ratio of power generated by the solid oxide fuel cell (24) and power generated by the turbo generator (22), wherein the controlling (234) is performed via an/the electronic engine control system of the hybrid propulsion system (10).
C17. The method (200) of any of paragraphs C1-C16, wherein the method (200) is performed utilizing the hybrid propulsion system (10) of any of paragraphs A1-A16.
D1. Use of the hybrid propulsion system (10) of any of paragraphs A1-A16 to provide thrust to the aircraft (12).

As used herein, the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa. Similarly, subject matter that is recited as being configured to perform a particular function may additionally or alternatively be described as being operative to perform that function.

As used herein, the term "and/or" placed between a first entity and a second entity means one of (1) the first entity, (2) the second entity, and (3) the first entity and the second entity. Multiple entries listed with "and/or" should be construed in the same manner, i.e., "one or more" of the entities so conjoined. Other entities optionally may be present other than the entities specifically identified by the "and/or" clause, whether related or unrelated to those entities specifically identified. Thus, as a non-limiting example, a reference to "A and/or B," when used in conjunction with open-ended language such as "comprising," may refer, in one example, to A only (optionally including entities other than B); in another example, to B only (optionally including entities other than A); in yet another example, to both A and B (optionally including other entities). These entities may refer to elements, actions, structures, steps, operations, values, and the like.

The various disclosed elements of apparatuses and steps of methods disclosed herein are not required to all apparatuses and methods according to the present disclosure, and the present disclosure includes all novel and non-obvious combinations and subcombinations of the various elements and steps disclosed herein. Nevertheless, the scope of protection is determined by the appended claims.

## Claims

1. A hybrid propulsion system (10) for an aircraft (12), the hybrid propulsion system (10) comprising:
a liquid natural gas turboshaft engine (20);
a turbo generator (22) operatively coupled to the turboshaft engine (20);
a liquid natural gas solid oxide fuel cell (24); and
an electric fan (26) configured to generate thrust for the aircraft (12), wherein the electric fan (26) is selectively powered by the turbo generator (22), or the solid oxide fuel cell (24) or by both.

2. The hybrid propulsion according to claim 1, wherein the turbo generator (22) and the solid oxide fuel cell (24) simultaneously provide electric power to the electric fan (26).

3. The hybrid propulsion system (10) according to claim 1 or 2, further comprising a fuel system (72) configured to provide liquid natural gas to the turboshaft engine (20) and the solid oxide fuel cell (24).

4. The hybrid propulsion system (10) according to any one of claims 1 to 3, wherein the turboshaft engine (20) comprises a low-pressure compressor (28) configured to receive environment air from a primary inlet (42).

5. The hybrid propulsion system (10) according to claim 4, wherein the low-pressure compressor (28) is configured to pre-condition bleed air (46) for the solid oxide fuel cell (24) via compression of the bleed air (46) such that the bleed air (46) extracted from the low-pressure compressor (28) is used as a source for the solid oxide fuel cell (24), and wherein the low-pressure compressor (28) is configured to deliver the bleed air (46) to the solid oxide fuel cell (24).

6. The hybrid propulsion system (10) according to claim 5, further comprising a compressor and turbine pair (54), wherein the compressor (50) is downstream of the low-pressure compressor (28) of the turboshaft engine (20) following a bleed flow path (48) of the bleed air (46), wherein the compressor (50) is upstream of a cathode (52) of the solid oxide fuel cell (24), and wherein the turbine (56) is downstream of the cathode (52) of the solid oxide fuel cell (24) such that the turbine (56) is configured to receive fuel cell exhaust (64) from the solid oxide fuel cell (24), the compressor and turbine pair (54) extracting energy from the fuel cell exhaust (64) from the solid oxide fuel cell (24) to condition the bleed air (46) at the cathode (52) of the solid oxide fuel cell (24).

7. The hybrid propulsion system (10) according to claim 6, further comprising:
a splitter (66) upstream of the turbine (56) and downstream of the cathode (52) of the solid oxide fuel cell (24); and
a mixer (68) downstream of the turbine (56), wherein the mixer (68) receives turbine exhaust (70) from the turbine (56) and fuel cell exhaust (64) from the solid oxide fuel cell (24), and wherein the splitter (66) and the mixer (68) are configured to control an exit pressure of the turbine exhaust (70) exiting the turbine (56).

8. The hybrid propulsion system (10) according to any one of claims 1 to 7, further comprising a low-pressure turbine (34) of the turboshaft engine (20) and a fuel system (72), and wherein the hybrid propulsion system (10) is configured to pre-heat liquid natural gas from the fuel system (72) using engine exhaust (74) from the low-pressure turbine (34).

9. The hybrid propulsion system (10) according to any one of claims 1 to 8, further comprising a fuel system (72) and a condenser (76) that receives liquid natural gas from the fuel system (72), wherein the condenser (76) gasifies the liquid natural gas to form gaseous natural gas (82), and wherein the condenser (76) condenses liquid water out of engine exhaust (74) exiting the turboshaft engine (20).

10. The hybrid propulsion system (10) according to claim 9, further comprising a recuperator (78) downstream from the condenser (76), wherein the recuperator (78) receives fuel cell exhaust (64) from the solid oxide fuel cell (24), wherein the recuperator (78) further heats the gaseous natural gas (82) from the condenser (76) using heat from the fuel cell exhaust (64), and wherein the recuperator (78) provides the gaseous natural gas (82) from the condenser (76) to the turboshaft engine (20), and optionally wherein the hybrid propulsion system (10) further comprises a water extractor (80) configured to receive air (84) with liquid water in the air (84) from the condenser (76), wherein the water extractor (80) is further configured to receive gaseous natural gas (82), and wherein the water extractor (80) generates water vapor and mixes the water vapor with the liquid natural gas to provide humidified natural gas to an anode (90) of the solid oxide fuel cell (24).

11. The hybrid propulsion system (10) according to claim 10, further comprising a turboshaft mixer (92) downstream of the recuperator (78), wherein the turboshaft mixer (92) mixes high-pressure fuel cell exhaust (64) from the solid oxide fuel cell (24) into an exit stream exiting from a low-pressure turbine (34) of the turboshaft engine (20).

12. The hybrid propulsion system (10) according to any one of claims 1 to 11, further comprising a fuel system (72), and an electronic engine controller configured to:
- distribute a ratio of electric power load to the solid oxide fuel cell (24) and the turbo generator (22);
- determine a ratio of fuel consumption of the solid oxide fuel cell (24) and the turbo generator (22), and
- based on the ratio of fuel consumption, determine a fuel ratio of an amount of fuel distributed to each of the turboshaft engine (20) and the solid oxide fuel cell (24) by the fuel system (72) of the hybrid propulsion system (10).

13. An aircraft (12), comprising:
a fuselage (60);
a wing (62) supported by the fuselage (60); and
a hybrid propulsion system (10) according to any one of claims 1 to 12.

14. A method (200) of providing thrust to an aircraft (12) via a hybrid propulsion system (10), the method (200) comprising:
generating (202) a first amount of electric power via a turbo generator (22) that is operatively coupled to a liquid natural gas turboshaft engine (20) of the aircraft (12);
generating (204) a second amount of electric power via a liquid natural gas solid oxide fuel cell (24); and
powering (206) an electric fan (26) selectively via the first amount of electric power, or the second amount of electric power or both, thereby generating thrust for the aircraft (12) via operation of the electric fan (26), preferably wherein the first amount of electric power and the second amount of electric power are provided to the electric fan (26) substantially simultaneously.

15. The method (200) according to claim 14, further comprising at least one of the following subsets of steps:
Subset (A), including:
cooling (208) exhaust from the turboshaft engine (20) via liquid natural gas from a fuel system (72) of the hybrid propulsion system (10);
pre-heating (210) the liquid natural gas from the fuel system (72) via exhaust from a low-pressure turbine (34) of the turboshaft engine (20);
condensing (212) the liquid natural gas from the fuel system (72) and the exhaust from the turboshaft engine (20); and
recuperating (214) gaseous natural gas (82) from a condenser (76) of the hybrid propulsion system (10) via fuel cell exhaust (64) from the solid oxide fuel cell (24);
and/or Subset (B) including:
extracting (216) water and generating water vapor from exhaust of the turboshaft engine (20); and
adding (218) water vapor to natural gas from a fuel system (72) of the hybrid propulsion system (10) to provide humidified natural gas to an anode (90) of the solid oxide fuel cell (24);
and/or Subset (C) including:
extracting (220) bleed air (46) from a low-pressure compressor (28) of the turboshaft engine (20) and providing (222) extracted bleed air (46) to a cathode (52) of the solid oxide fuel cell (24);
controlling (226) one or more conditions of fuel reactants for the solid oxide fuel cell (24), via a compressor and turbine pair (54), wherein the compressor (50) of the compressor and turbine pair (54) receives bleed air (46) from the low-pressure compressor (28) of the turboshaft engine (20); and
mixing (232) exhaust from the solid oxide fuel cell (24) into an exit stream exiting a low-pressure turbine (34) of the turboshaft engine (20), via a turboshaft mixer (92), thereby increasing power generated by the turbo generator (22).
